Europäisches Patentamt

European Patent Office

Office européen des brevets

(19)

(11) Publication number: **0 187 497 B1**

(12) **EUROPEAN PATENT SPECIFICATION**

(45) Date of publication of patent specification: **02.09.92**  (51) Int. Cl.5: **C10G 45/64**, C10L 1/04

(21) Application number: **85309097.5**

(22) Date of filing: **13.12.85**

(54) **Process for producing high boiling jet fuel.**

(30) Priority: **31.12.84 US 688081**

(43) Date of publication of application:
**16.07.86 Bulletin 86/29**

(45) Publication of the grant of the patent:
**02.09.92 Bulletin 92/36**

(84) Designated Contracting States:
**BE DE FR GB IT NL**

(56) References cited:
**EP-A- 0 102 716**
**US-A- 3 647 681**
**US-A- 4 556 477**

(73) Proprietor: **MOBIL OIL CORPORATION**
**150 East 42nd Street**
**New York New York 10017(US)**

(72) Inventor: **Chen, Nai Yuen**
**Forrest Central Drive, RD**
**Titusville New Jersey 08560(US)**
Inventor: **Garwood, William Everett**
**125 Warwick Road**
**Haddonfield New Jersey 08033(US)**

(74) Representative: **Cooper, John Anthony et al**
**Mobil Court 3 Clements Inn**
**London WC2A 2EB(GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

**Description**

This invention relates to a process for producing high boiling jet fuel.

Current kerosene-type jet fuels have end points below 343°C (560°F), usually below 288°C (550°F) due to freeze point limitations. Quite obviously, preparation of a high quality jet fuel with a boiling range extended to 399°C (750°F) end point increases the amount of such fuel which can be obtained from a given amount of crude and hence has high economic potential.

The preparation of jet fuel by various techniques, including dewaxing is well known in the art. For example, the concept of catalytic dewaxing a petroleum feed with ZSM-5 followed by hydrogenation to produce jet fuel is disclosed in U.S. Reissue 28,398, particularly Example 11 thereof. As can be seen, however, Example 11 of this reissue patent is concerned with treatment of a kerosene which has an end point of 260°C (500°F).

US-A-3,647,681 is directed towards a catalytic dewaxing process for the production of jet fuels with mordenite catalysts and discloses extending the boiling range of jet fuel to 343°C (650°F). In particular, this patent teaches at column 3, lines 64 and following, catalytic dewaxing of a 204-399°C (400-750°F) fraction and then taking only the 149-343°C (300-650°F) portion of this dewaxed fraction and blending it with conventional jet fuel.

In the past, it has also been found that dewaxing to extend the boiling range of a jet fuel tends to increase its aromatic content. However, current regulations limit the aromatic content of jet fuel to a maximum of 25% by volume so that it has previously been necessary to subject the dewaxed product to the additional step of hydrotreating, thereby increasing the cost of the operation.

According to the present invention, there is provided a process for the production of a jet fuel which comprises contacting a feedstock having a boiling range of 166 to 400°C (330 to 750°F) in the presence of added hydrogen with a crystalline zeolite ZSM-22 having the X-ray diffraction pattern shown in Table A and containing a hydrogenation component at a temperature of 385 to 413°C (725° to 775°F) and a pressure of 1480 to 13891 kPa so as to obtain a product having a lowered freeze point and then blending the 166°C+ fraction of this product with a conventional jet fuel.

Thus, it has now been found that when ZSM-22 is used to dewax a jet fuel feedstock under carefully controlled conditions of temperature and pressure, the aromatics content of the feedstock does not substantially increase even when dewaxing is carried out to lower the pour point and freeze point to very low levels. Moreover, high liquid product yields are obtained. While not wishing to be bound by any theory of operation, it appears that the freeze point lowering which occurs by contacting the feedstock with ZSM-22 is primarily due to hydroisomerization and there is less cracking of branched paraffins as compared to the use of prior art catalysts such as ZSM-5.

ZSM-22 zeolite is a highly siliceous zeolite which can be identified by its characteristic diffraction pattern which is set forth in Table A below and which distinguishes it from other crystalline materials:

TABLE A

| Most Significant Lines of ZSM-22 | |
|---|---|
| Interplanar d-spacings (A) | Relative Intensity |
| 10.9 ± 0.2 | M-VS |
| 8.7 ± 0.16 | W |
| 6.94 ± 0.10 | W-M |
| 5.40 ± 0.08 | W |
| 4.58 ± 0.07 | W |
| 4.36 ± 0.07 | VS |
| 3.68 ± 0.05 | VS |
| 3.62 ± 0.05 | S-VS |
| 3.47 ± 0.04 | M-S |
| 3.30 ± 0.04 | W |
| 2.74 ± 0.02 | W |
| 2.52 ± 0.02 | W |

These values were determined by standard techniques. The radiation was the K-alpha doublet of copper and a diffractometer equipped with a scintillation counter and an associated computer were used.

The peak heights, I, and the positions as a function of 2 theta, where theta is the Bragg angle, were determined using algorithms on the computer associated with the spectrometer. From these, the relative intensities, 100 $I/I_o$, where $I_o$ is the intensity of the strongest line or peak, and d (obs.) the interplanar spacing in Angstroms (A), corresponding to the recorded lines, were determined. In Table I, the relative intensities are given in terms of the following symbols vs = very strong, s = strong, m = medium, w = weak, etc. It should be understood that this x-ray diffraction pattern is characteristic of all the species of ZSM-22 zeolite compositions. Ion exchange of the alkali or alkaline earth metal cations with other ions results in a zeolite which reveals substantially the same X-ray diffraction pattern as that of Table I with some minor shifts in interplanar spacing and variations in relative intensity. Other minor variations can occur, depending on the silica to alumina ratio of the particular sample, as well as its degree of thermal treatment.

The ZSM-22 zeolite freely sorbs normal hexane and has a pore dimension greater than about 4 Angstroms. The sorption characteristics of ZSM-22 for hydrocarbons are given in more detail in Table B. Sorption capacities for n-hexane (normal hexane), cyclohexane, and water are about 4% by weight, or about one third that of ZSM-5. Cyclohexane and o-xylene sorption is relatively slow, making it difficult to determine equilibrium capacities.

TABLE B
ZSM-22 Sorption Data

| | | | | Sorptions (wt percent)[a] | | | |
|---|---|---|---|---|---|---|---|
| Sample | Zeolite Form | 3-methyl-n-hexane | Cyclo-pentane | hexane | $H_2O$ | o-xylene[b] | |
| 1 | Hydrogen | 3.9 | – | 2.8 | – | – | |
| 2 | Hydrogen | 4.2 | 3.9 | 1.1 | – | 2 | |
| 3 | Hydrogen | 4.1 | – | 3.3 | 4.7 | – | |
| 4 | as-synthesized | 3.4 | – | – | – | – | |

a. Hydrocarbons: vapor pressure = 20mm Hg, temperature = 25°C; water-pressure = 12mm Hg, temperature = 25°C.

b. Vapor pressure = 3.7mm Hg, temperature = 120°C.

c. Slow Tailing sorption, nonequilibrium values.

The n-hexane/o-xylene ratios may vary under different conditions, as illustrated by the data of Table C, below:

TABLE C

Sample Temperature = 100°C

| Sample | Zeolite Form | Sorbate | Vapor Pressure (mm Hg) | P/Pc | Wt % sorbed |
|---|---|---|---|---|---|
| 5 | Hydrogen | n-Hexane | 80 | 0.04 | 4.0 |
| 6 | Hydrogen | o-Xylene | 5 | 0.025 | 1.1 |

Another important characteristic of a zeolite is its Constraint Index which, as disclosed in for example U.S. Patent No. 4,016,218 is a measure of the ability of the zeolite to allow access and egress of certain molecules into its internal pore structure. The Constraint Index of ZSM-22 is about 2.

ZSM-22 can be prepared from a reaction mixture comprising a source of silica, an alkane diamine, an alkali metal oxide or an alkaline earth metal oxide, e.g., sodium, potassium, cesium, calcium or strontium, water, and alumina, and having a composition, in terms of mole ratios of oxides, falling within the following ratios:

| Reactants | Broad | Preferred | Most Preferred |
|---|---|---|---|
| $SiO_2/Al_2O_3$ | = 20 to infinity | 30 to 1000 | 60 to 200 |
| $H_2O/SiO_2$ | = 10 to 100 | 20 to 60 | 20 to 60 |
| $OH^-/SiO_2$ | = 0 to 0.3 | 0.1 to 0.2 | 0.1 to 0.2 |
| $M^+/SiO_2$ | = 0 to 2.0 | 0.1 to 1.0 | 0.1 to 1.0 |
| $RN/SiO_2$ | =0.01 to 2.0 | 0.05 to 1.0 | 0.05 to 1.0 |

wherein RN is a $C_2$-$C_{12}$ alkane diamine of the formula
$H_2N$-$(CH_2)_n$-$NH_2$ (abbreviated $C_nDN$), n = 2 to 12, and
preferably is 5 to 8, and M is an alkali metal or an alkaline earth metal. The mixture is maintained at crystallization temperature until crystals of the ZSM-22 zeolite are formed, whereafter, the crystals are separated from the liquid by any conventional means, washed and recovered.

Crystallization can be carried out at either static or stirred conditions in a reactor vessel, e.g., a polypropylene jar, teflon lined or stainless steel autoclaves, at 80°C (176°F) to 210°C (410°F) for 6 hours to 150 days. Thereafter, the crystals are separated from the liquid and recovered. Crystal size and crystallization time vary with the nature of the reaction mixture employed and the crystallization conditions.

The composition can be prepared utilizing materials which supply the appropriate oxide. Such materials include aluminates, alumina, silicates, sodium silicate, silica hydrosol, silica gel, silicic acid, sodium, potassium or cesium hydroxide, and an alkane diamine. Suitable diamines are, e.g., ethanediamine, propanediamine, butanediamine, pentanediamine, hexanediamine, heptanediamine, octane-diamine, nonanediamine, decanediamine, undecanediamine, duodecane-diamine. The reaction mixture can be prepared either batchwise or continuously.

As set forth above, the ZSM-22 zeolite can be prepared over a relatively wide range of $SiO_2/Al_2O_3$ ratios of 20 to infinity. However, it has been found that larger alkali metal cations, e.g., $K^+$ and $Cs^+$, are preferably used at the $SiO_2/Al_2O_3$ ratios of 20 to 90 to obtain ZSM-22 crystals substantially free of impurities or other zeolites. The potassium ($K^+$) cation is preferred at such low $SiO_2/Al_2O_3$ ratios because cesium (Cs) appears to decrease the reaction rate. At the $SiO_2/Al_2O_3$ ratios of 90 or above, e.g., 90 to 200, smaller cations, e.g., sodium ($Na^+$) cations, are preferably used to produce substantially 100% crystalline ZSM-22.

In the as-synthesized form, the resultant ZSM-22 has a calculated composition, in terms of moles or oxides, after dehydration, as follows:

$$(0.02 \text{ to } 10)RN: (0 \text{ to } 2)M_{2/n}O:(0 \text{ to } 5)Al_2O_3:100SiO_2$$

wherein RN is a $C_2$-$C_{12}$ alkane diamine and M is an alkali metal or an alkaline earth metal having a valence n, e.g., Na, K, Cs, Li, Ca or Sr.

The original cations of the as-synthesized ZSM-22 may be replaced at least in part by other ions using conventional ion exchange techniques, although it may be necessary to precalcine the ZSM-22 zeolite prior to ion exchange so as to remove the organic material. The replacing ions introduced to replace the original alkali, alkaline earth and/or organic cations may be any ions that are desired so long as they can pass through the channels within the zeolite crystals. Desired replacing ions are those of hydrogen, rare earth metals, metals of Groups IB, IIA, IIB, IIIA, IIIB, IVA, IVB, VIB and VIII of the Periodic Table. Among the metals, those particularly preferred are rare earth metals, manganese, zinc and those of Group VIII of the Periodic Table.

The ZSM-22 zeolite, as synthesized, tends to crystallize as agglomerates of elongated crystals having the size of 0.5 to 2.0 microns. Ballmilling fractures these crystals into smaller size crystallites (about 0.1 micrometer) without significant loss of crystallinity. The zeolite can be shaped into a wide variety of particle sizes. Thus the particles can be in the form of a powder, a granule, or a molded product, such as an extrudate having particle size sufficient to pass through a 2 mesh (Tyler) screen and be retained on a 400 mesh (Tyler) screen. In cases where the catalyst is molded, such as by extrusion, the crystals can be extruded before drying or partially dried and then extruded.

In the novel process of this invention, the ZSM-22 zeolite has a hydrogenation metal associated therewith. The hydrogenation metal component, i.e., metal, metal oxide, metal sulfide, is usually one of Group VIIIA of the Periodic Table or a mixture thereof alone or in combination with at least one metal, metal oxide, metal sulfide from Group VIA of the Periodic Table. Examples of metals from Group VIIIA are platinum, palladium, irridium, ruthenium, cobalt and nickel. Examples of metals from Group VIA are chromium, molybdenum and tungsten. The hydrogenation metal content can vary from 0.05 to 2 percent by weight. The most preferred hydrogenation metal is platinum.

The catalytic hydrodewaxing step in accordance with the present process is carried out at a narrow temperature range of 385 to 413°C (725 to 775°F), with a temperature around 400°C (750°F) being particularly preferred. The hydrogen pressure in the catalytic hydrodewaxing step can vary from 1480 to 13891 kPa (200 to 2000 psig), although the preferred pressure is about 2860 kPa (400 psig). The liquid hourly space velocity can range from 0.2 to 10.

The 166°C plus (330°F plus) fraction of the dewaxed product is then blended, conveniently in a ratio of 1:1 to 1:2, with a conventional jet fuel.

As will be demonstrated in Examples which follow there is only a narrow range of temperature over which the process of this invention can successfully be carried out. Thus, it has been found that temperatures below 385°C (725°F) do not reduce the pour point sufficiently to obtain a product which can be blended. On the other hand, temperatures in excess of 413°C (775°F) result in a product with too high a concentration of aromatics and naphthenes as well as drastic yield losses.

The following Examples will illustrate the novel process of this invention.

EXAMPLES 1 - 7

A light Arab gas oil having the following properties was process over ZSM-22 containing 0.51% by weight platinum:

```
        Gravity, °API                      37.2
                                           Specific
    0.8388
        Pour Point, °F (°C)                +20 (-7°)
        Freeze Point, °F (°C)              +25 (-4°)
        Hydrogen, wt percent              13.42
        Sulfur, wt percent                 1.01
        Aromatics, vol percent            31.1
        Naphtalenes, vol percent           8.5
        Smoke Point                       19.2
        Boiling Range, °F (°C)
         1 percent                        263 (128)
         2 percent                        316 (158)
         5 percent                        381 (194)
        10 percent                        426 (219)
        30 percent                        506 (263)
        50 percent                        559 (293)
        70 percent                        608 (320)
        90 percent                        675 (357)
        95 percent                        703 (373)
        98 percent                        731 (388)
```

The zeolite catalyst was prepared by impregnating ZSM-22 with chloroplatinic acid to the desired weight level followed by drying, calcining in air for 3 hours at 482°C (900°F) and then reducing with hydrogen in-situ at 482°C (900°F) for one hour.

The dewaxing was carried out at 1 LHSV, 2860 kPa (400 psig), 71Nm³ (2500 SCF) H$_2$/hour and at various temperatures in the range 260-427°C (500-800°F). The results are shown in the following table:

Table 1

Run Data

Charge Light Arab Gas Oil, Catalyst 0.57 wt % Pt/ZSM Extrudate

| Examples | CHARGE | 1 | 2 |
|---|---|---|---|
| Av. Cat. Temp., °F (°C) | | 501 (261) | 550 (288) |
| Mat. Bal., hours | | 21.5 | 22 |
| TOS, days | | 8.3[2] | 9.2 |
| Liquid Product, wt % H | 13.42 | 13.61 | 13.58 |
| Pour Point, °F(C) (Lab) | +20 (−7) | +2 (−17) | +15 (−9) |
| Mat. Bal., wt % | | 99.6 | 99.9 |
| Yields, wt % (NLB) | | | |
| $C_1+C_2$ | | below 0.1 | 0.1 |
| $C_3$ | | 0.1 | 0.3 |
| $C_4$ | | 0.1 | 0.2 |
| $C_5$ | | below 0.1 | below 0.1 |
| $C_6$−330°F (166°C) | | | below 0.1 |
| 330°F$^+$ (166°C$^+$) | 100 | 99.8 | 99.4 |
| H$_2$Consumption, SCF/bbl $(m^3/m^3)$ | | 120(21.4) | 110(19.6) |
| 330°F$^+$ (166°C$^+$) Properties | | | |
| Gravity, °API | 37.2 | 36.6 | 37.6 |
| Specific | 0.8388 | 0.8418 | 0.8368 |
| Pour Point, °F (D-97)(°C) | +20 (−7) | +20 (−7) | +15 (−9) |
| Freeze Point, °F (°C) | +25 (−4) | − | +23 (−5) |
| Sulfur, wt % | 1.01 | 0.94 | 0.86 |
| Aniline Point, °F (°C) | 160.0 (71.1) | − | 161.5 (71.9) |
| Aromatics, vol % | 31.1 | 29.4 | 29.1 |
| Naphthalenes, vol % | 8.5 | − | 8.0 |
| Boiling Range, °F, (D-2887)°C | | | |
| 1% | 263 (128) | − | 268 (131) |
| 2 | 316 (158) | − | 321 (161) |
| 5 | 381 (194) | − | 387 (197) |
| 10 | 426 (219) | − | 430 (221) |
| 30 | 506 (263) | − | 508 (264) |
| 50 | 559 (293) | − | 560 (293) |
| 70 | 608 (320) | − | 610 (321) |
| 90 | 675 (357) | − | 679 (359) |
| 95 | 703 (373) | − | 709 (376) |
| 98 | 731 (388) | − | 741 (394) |

6

Table 1 (continuation 1)

Run Data

Charge Light Arab Gas Oil, Catalyst 0.57 wt % Pt/ZSM Extrudate

| Examples | 3 | 4 | 5 |
|---|---|---|---|
| Av. Cat. Temp., °F (°C) | 599 (315) | 650 (343) | 700 (371) |
| Mat. Bal., hours | 21 | 22 | 22 |
| TOS, days | 10.1 | 11.0 | 11.9 |
| Liquid Product, wt % H | 13.72 | 13.84 | 13.68 |
| Pour Point, °F(C) (Lab) | +10 (−12) | −5 (−21) | −15 (−26) |
| Mat. Bal., wt % | 98.9 | 98.4 | 99.8 |
| Yields, wt % (NLB) | | | |
| $C_1+C_2$ | 0.4 | 0.8 | 0.5 |
| $C_3$ | 0.7 | 1.4 | 1.2 |
| $C_4$ | below 0.1 | 0.1 | 0.5 |
| $C_5$ | below 0.1 | below 0.1 | below 0.1 |
| $C_6$-330°F (166°C) | below 0.1 | below 0.1 | below 0.1 |
| 330°F$^+$ (166°C$^+$) | 99.0 | 97.8 | 97.3 |
| | | | |
| $H_2$Consumption, SCF/bbl | 215(38.3) | 330(58.7) | 205(36.5) |
| 330°F$^+$ (166°C$^+$) Properties | | | |
| Gravity, °API | 37.7 | 37.9 | 38.5 |
| Specific | 0.8363 | 0.8353 | 0.8324 |
| Pour Point, °F (D-97)(°C) | +5 (−15) | −10 (−23) | −20 (−29) |
| Freeze Point, °F (°C) | +18 (−8) | +10 (−12) | −4 (−20) |
| Sulfur, wt % | 0.74 | 0.56 | 0.26 |
| Aniline Point, °F (°C) | 159.7 | 157.5 | 156.0 |
| | (70.9) | (69.7) | (68.9) |
| Aromatics, vol % | 31.0 | 31.5 | 33.0 |
| Naphthalenes, vol % | 7.7 | 7.1 | 6.2 |
| Boiling Range, °F, (D-2887)°C | | | |
| 1% | 281 (138) | 259 (126) | 210 (99) |
| 2 | 323 (162) | 306 (152) | 300 (149) |
| 5 | 379 (193) | 374 (190) | 344 (173) |
| 10 | 423 (217) | 420 (216) | 402 (206) |
| 30 | 502 (261) | 494 (257) | 485 (252) |
| 50 | 554 (290) | 543 (286) | 536 (280) |
| 70 | 605 (318) | 596 (313) | 589 (309) |
| 90 | 674 (357) | 663 (351) | 656 (347) |
| 95 | 701 (372) | 691 (366) | 685 (363) |
| 98 | 729 (387) | 718 (381) | 713 (378) |

<u>Table 1</u> (continuation 2)

<u>Run Data</u>

Charge Light Arab Gas Oil, Catalyst 0.57 wt % Pt/ZSM Extrudate

| Examples | 6 | 7 |
|---|---|---|
| Av. Cat. Temp., °F (°C) | 751 (399) | 800 (427) |
| Mat. Bal., hours | 22 | 22 |
| TOS, days | 12.8 | 13.7 |
| Liquid Product, wt % H | 13.61 | 13.25 |
| Pour Point, °F(C) (Lab) | -30 (-34) | below -60(below -51) |
| Mat. Bal., wt % | 98.8 | 99.2 |
| Yields, wt % (NLB) | | |
| $C_1+C_2$ | 0.4 | 0.6 |
| $C_3$ | 1.1 | 2.1 |
| $C_4$ | 0.5 | 1.5 |
| $C_5$ | below 0.1 | 1.5 |
| $C_6$-330°F (166°C) | below 0.1 | 9.9 |
| 330°F$^+$ (166°C$^+$) | 97.2 | 83.4 |
| $H_2$Consumption, SCF/bbl | 140(24.9) | -25(-4.5) |
| 330°F$^+$ (166°C$^+$) Properties | | |
| Gravity, °API | 39.0 | 36.8 |
| Specific | 0.8299 | 0.8408 |
| Pour Point, °F (D-97)(°C) | -40 (-40) | -60( -51) |
| Freeze Point, °F (°C) | -20 (-29) | -60( -51) |
| Sulfur, wt % | 0.13 | 0.076 |
| Aniline Point, °F (°C) | 154.5 (68.1) | 141.5 (60.8) |
| Aromatics, vol % | 32.3 | 38.0 |
| Naphthalenes, vol % | 6.7 | 11.3 |
| Boiling Range, °F, (D-2887)°C | | |
| 1% | 228 (109) | 250 (121) |
| 2 | 270 (132) | 291 (144) |
| 5 | 339 (171) | 349 (176) |
| 10 | 400 (204) | 397 (203) |
| 30 | 485 (252) | 480 (249) |
| 50 | 535 (279) | 529 (276) |
| 70 | 588 (309) | 583 (306) |
| 90 | 657 (347) | 654 (346) |
| 95 | 686 (363) | 688 (364) |
| 98 | 718 (381) | 727 (386) |

As can be seen from Table 1, the pour and freeze point reduction in Examples 1, 2, 3 and 4 was relatively small whereas in Example 7, although a very desirable pour and freeze point reduction was obtained, the aromatic content of the product was unacceptable.

EXAMPLE 8-10

The product obtained from Example 6 and the product obtained from Example 7 were blended with a standard jet fuel which had the following properties:

8

| Gravity, °API | 42.1 |
| Specific | 0.8149 |
| Pour Point, °F (°C) | -60 (-51) |
| Freeze Point, °F (°C) | -53 (-47) |
| Hydrogen, wt percent | 13.63 |
| Sulfur, wt percent | 0.08 |
| Aromatics, vol percent | 19.7 |
| Naphthalenes, vol percent | 2.4 |
| Smoke Point | 20.2 |
| Boiling Range, °F (°C) | |
| 1 percent | 242 (117) |
| 2 percent | 271 (133) |
| 5 percent | 304 (151) |
| 10 percent | 328 (164) |
| 30 percent | 381 (194) |
| 50 percent | 419 (215) |
| 70 percent | 485 (252) |
| 90 percent | 506 (263) |
| 95 percent | 528 (276) |
| 98 percent | 575 (302) |

At a 1:1 (Example 8) and a 2:1 (Example 9) volume blend of the above stock was made with the 166°C plus (330°F plus) product from Example 6 and a 1:1 volume blend (Example 10) of the above was made with the 166°C plus (330°F plus) product from Example 7. The results are shown on the following Table:

| EXAMPLE | 8 | 9 | 10 |
|---|---|---|---|
| Jet fuel, vols | 1 | 2 | 1 |
| 166°C+(330°F+) Product, | | | |
| Run Temp., °F(°C) | 750 (399) | 750 (399) | 800 (427) |
| Volumes | 1 | 1 | 1 |
| Blend Properties | | | |
| Gravity, °API | 40.6 | 40.8 | 39.4 |
| Specific | 0.8222 | 0.8212 | 0.8280 |
| Pour Point, °F (°C) | -55 (-48) | -65 (-54) | -65 (-54) |
| Freeze Point, °F (°C) | -38 (-39) | -44 (-42) | -54 (-68) |
| Sulfur, wt percent[1] | 0.10 | 0.10 | 0.08 |
| Aromatics, vol percent[1] | 26.0 | 25.8 | 28.8 |
| Naphthalenes, vol %[1] | 4.5 | 3.8 | 6.8 |
| Smoke Point, minimum* | 19.5 | 19.5 | 16.5 |
| Boiling Range, °F (°C) | | | |
| 1 percent | 194 ( 90) | 195 ( 91) | 270 (132) |
| 2 percent | 245 (118) | 247 (119) | 290 (143) |
| 5 percent | 306 (152) | 302 (150) | 321 (161) |
| 10 percent | 342 (172) | 336 (169) | 345 (174) |
| 30 percent | 415 (213) | 399 (204) | 415 (213) |
| 50 percent | 473 (245) | 450 (232) | 469 (243) |
| 70 percent | 528 (276) | 501 (261) | 519 (271) |
| 90 percent | 629 (332) | 602 (317) | 615 (324) |
| 95 percent | 670 (354) | 650 (343) | 654 (346) |
| 98 percent | 712 (378) | 699 (371) | 695 (368) |

[1]Calculated from analysis of two components.


*Minimum 19.0

The 1:1 blend with the product from Example 7 had an unacceptable smoke point due to the fact that its aromatic content was too high.

## Claims

1. A process for the production of a jet fuel which comprises contacting a feedstock having a boiling range of 166 to 400°C (330 to 750°F) in the presence of added hydrogen with a crystalline zeolite ZSM-22 having the x-ray diffraction pattern shown in Table A and containing a hydrogenation component at a temperature of 385 to 413°C (725 to 775°F) and a pressure of 1480 to 13891 kPa so as to obtain a product having a lowered freeze point and then blending the 166°C+ fraction of this product with a conventional jet fuel having an end point below 343°C.

2. The process of claim 1 wherein the hydrogenation component is platinum.

3. The process of claim 1 or claim 2 wherein the temperature is about 400°C (750°F).

4. The process of any preceding claim wherein the pressure is about 2860 kPa (400 psig).

## Patentansprüche

1. Verfahren zur Herstellung von Düsentreibstoff, das den Kotakt eines Ausgangsmaterials mit einem Siedebereich von 166 bis 400°C (330 bis 750°F) in Gegenwart von zugesetztem Wasserstoff mit einem kristallinen Zeolith ZSM-22, der das in Tabelle A gezeigte Röntgenbeugungsdiagramm aufweist

10

und eine Hydrierungskomponente enthält, bei einer Temperatur von 385 bis 413°C (725 bis 775°F) und einem Druck von 1480 bis 13 891 kPa, um ein Produkt mit verringertem Gefrierpunkt zu schaffen, und das anschließende Mischen der 166°C$^+$-Fraktion dieses Produktes mit herkömmlichem Düsentreibstoff umfaßt, der einen Endpunkt unterhalb 343°C aufweist.

**2.** Verfahren nach Aspruch 1, worin die Hydrierungskomponente Platin ist.

**3.** Verfahren nach Anspruch 1 oder 2, worin die Temperatur etwa 400°C (750°F) beträgt.

**4.** Verfahren nach einem der vorstehenden Ansprüche, worin der Druck etwa 2860 kPa (400 psig) beträgt.

**Revendications**

**1.** Un procédé de production d'un carburant pour turbo-réacteur qui consiste à mettre une charge, présentant un point d'ébullition de 166 à 400°C (330 à 750°F), au contact, en présence d'hydrogène additionné, d'une zéolite cristalline ZSM-22 présentant le spectre de diffraction aux rayons X représenté dans le tableau A et contenant un constituant d'hydrogénation, à une température de 385 à 413°C (725 à 775°F) et à une pression de 1 480 à 13 891 kPa de façon à obtenir un produit présentant un point de congélation abaissé, puis à mélanger la fraction de point d'ébullition de 166°C + de ce produit avec un carburant pour turbo-réacteur classique présentant un point d'ébullition maximum de 343°C.

**2.** Le procédé selon la revendication 1, dans lequel le constituant d'hydrogénation est le platine.

**3.** Le procédé selon la revendication 1 ou la revendication 2, dans lequel la température est de l'ordre de 400°C (750°F).

**4.** Le procédé selon l'une quelconque des revendications précédentes, dans lequel la pression est de l'ordre d'environ 2 860 kPa (400 psig).